(19) Europäisches Patentamt European Patent Office Office européen des brevets

(11) **EP 1 914 560 A1**

(12) **EUROPEAN PATENT APPLICATION**

(43) Date of publication:
**23.04.2008 Bulletin 2008/17**

(51) Int Cl.:
***G01S 1/00*** *(2006.01)*

(21) Application number: **07118617.5**

(22) Date of filing: **16.10.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (71) Applicant: **Alcatel Lucent**<br>**75008 Paris (FR)**<br><br>(72) Inventor: **Monnerat, Michel**<br>**31240 L'Union (FR)** |
| (30) Priority: **18.10.2006 FR 0654338** | (74) Representative: **Hedarchet, Stéphane**<br>**Compagnie Financiere Alcatel-Lucent**<br>**54, rue La Boétie**<br>**75008 Paris (FR)** |

(54) **Method of assisting a GPS receiver to improve the calculation of altitude**

(57) The present invention concerns a method of assisting satellite navigation. This method aims to provide a method enabling an assistance data server to broadcast to a telecommunication equipment equipped with a GPS receiver a set of parameters enabling the receiver to convert the altitude calculated in a frame of reference tied to the reference ellipsoid of the system (eg: WGS84 for the GPS) into an altitude tied to the geoid or to the mean sea level at the position of the receiver.

FIG_5

EP 1 914 560 A1

**Description**

The present invention concerns a method of assisting a satellite navigation receiver with the aim of improving the process of converting the altitude calculated with respect to a frame of reference tied to the navigation satellite system to a local geometrical frame of reference.

In a satellite positioning system using RNSS (Radio Navigation Satellite System) type receivers such as GPS (Global Positioning System) or Galileo receivers, the data signals for calculating the position of the receiver come from different satellites (at least four to determine four unknowns x, y, z and t). It is known that the user coordinates (x, y, z) are resolved in a WGS84 type frame of reference that has a system of axes centered on the center of the earth - in the WGS84 sense - and the axes whereof are tied to the Earth (WGS84 (World Geodetic System 1984) is a terrestrial geodesic system used by the Global Positioning System). Based on a network of five ground control stations, none of which are in Europe, the system is defined by the Defense Mapping Agency: its latest implementation dates from 1996 and its internal coherence is 0.1 m. The associated ellipsoid is WGS84 (= GRS80), and the zero meridian is Greenwich. The projection routinely associated with WGS84 is the cylindrical UTM (Universal Transverse Mercator) projection.

In the case of the GPS, but also of Galileo and Glonass, the signal sent by each of the satellites is based on a spread spectrum technique. The signal is therefore a binary data signal modulated by a signal whose spectrum has been spread using a CDMA (Code Division Multiple Access) process. In other words, each bit of the data signal is replaced by a spreading sequence specific to each satellite. The data is transmitted in serial mode at 50 bits/s for GPS (50 bits/s or 0.02 s/bit). A spreading sequence such as a Gold type pseudo-random sequence is transmitted at a much higher rate: a Gold sequence can be considered as a series of bits that is worked through with a clearly defined clock period; the term "chip" denotes a bit of the sequence and, by extension, the duration of such a bit. The spreading sequence is thus transmitted at a rate of 1.023 Mchips/s for GPS (a chip therefore has a duration of approximately 1 $\mu$s) and includes 1023 "chips" (i.e. a duration of 1 ms): there are therefore 20 sequence repetitions per data bit.

The modulation by the spread spectrum signal means that a standard demodulator will see the received signal as noise.

Generally speaking, the correlation function $f(\tau)$ of two signals $f_i(t)$ and $f_j(t)$ is given by the equation:

$$f(\tau) = \int_{+\infty}^{-\infty} f_i(t).f_j(t-\tau).dt$$ , where $\tau$ denotes a variable time. In practice, of course, the integration is not effected from -∞ to +∞ but over a finite time period, the integral being divided by the duration of said period. The expression "autocorrelation function" will be used if the functions $f_i(t)$ and $f_j(t)$ are identical or the expression "intercorrelation function" if the functions $f_i(t)$ and $f_j(t)$ are different.

Each satellite k has its own pseudo-random signal $c_k(t)$. Each of these pseudo-random signals has the following property: its autocorrelation function is nil except in the vicinity of the nil time shift at which it assumes a triangular shape;

in other words, the integral $\int_{+\infty}^{-\infty} c_k(t).c_k(t-\tau).dt$ is nil when $\tau$ is non-nil and is at a maximum when $\tau$ is nil.

Furthermore, the signals each associated with a different satellite are chosen so that their intercorrelation function is nil; in other words, the integral $\int_{+\infty}^{-\infty} c_k(t).c_{k'}(t-\tau).dt$ is nil regardless of $\tau$ if k and k' are different.

The spread spectrum signals from the satellites are therefore chosen to be orthogonal.

When the receiver seeks to acquire data from a particular satellite, the receiver correlates the signal received with a replica of the pseudo-random sequence of the satellite that is being sought (the sequence of the satellite is assigned to it once and for all and does not change at any time during the life of the satellite).

Thus the received signal S(t) is the sum of all of the signals transmitted by each satellite:

$$S(t) = \sum_{k=1}^{n} c_k(t).d_k(t)$$ , where n is the number of satellites, $c_k(t)$ denotes the spread spectrum signal from the

satellite k and $d_k(t)$ denotes the data from the satellite k.

If seeking to acquire data from the satellite m, the local replica will correspond to the signal $c_m(t)$. Thus, after correlation and supposing that the spreading signals are perfectly orthogonal, all data from the satellites that are not being sought is eliminated (the intercorrelation functions are nil) to leave only data from the satellite m. The correlation is possible because the duration of a spreading sequence is twenty times smaller than the duration of a data bit.

Once the signals from at least three satellites have been acquired, a tracking loop is initiated on each of the signals. This tracking loop maintains the synchronization of the receiver to each of the signals from the satellites, the effect of which is to enable:

1. demodulation of the data transmitted by each satellite,
2. measurement of the synchronization difference as seen by the receiver between the various tracked satellites.

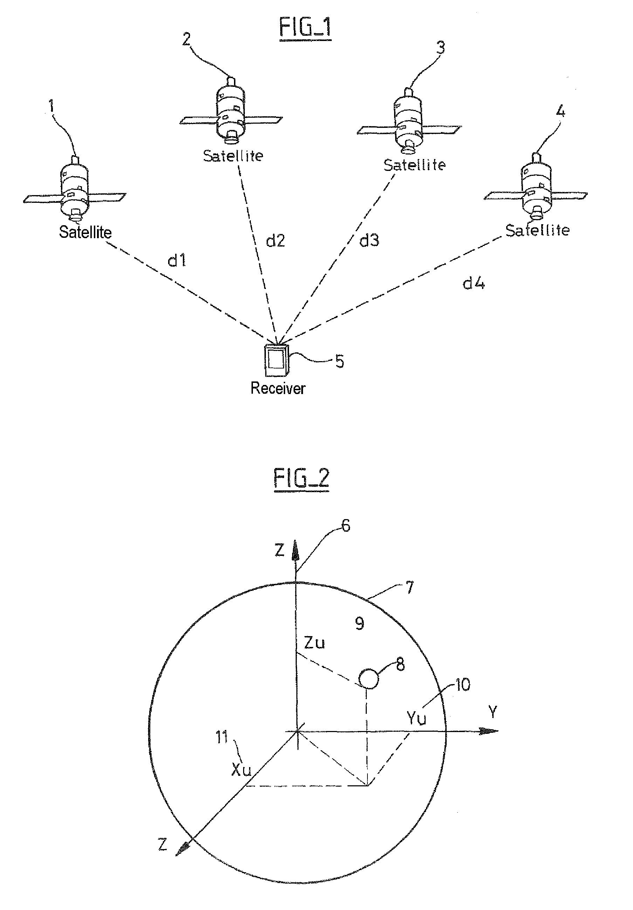

The data from each of the satellites further includes information in the form of the time of day at which the signal was sent from the satellite. Once in tracking mode, the receiver can then determine the time of day of arrival of the signal. The difference between the time of day of arrival and the time of day of sending (demodulated in the message) enables the receiver to deduce the distance between it and said satellite apart from an unknown, namely the clock difference between the receiver itself and the tracked satellite. By this method, as shown in figure 1, a receiver 5 measures the times $Tr_1$, $Tr_2$, $Tr_3$, $Tr_4$ of reception of the signals from the satellites 1, 2, 3, 4, which signals were sent at the respective times $Te_1$, $Te_2$, $Te_3$, $Te_4$. Letting $\Delta H$ denote the clock difference unknown between the receiver 5 and all of the satellites 1, 2, 3, 4, which for their part are assumed to be synchronous, it follows that the distances d1, d2, d3, d4 can be written:

$$\begin{cases} d_1 = c(Tr_1 - Te_1 + \Delta H) \\ d_2 = c(Tr_2 - Te_2 + \Delta H) \\ d_3 = c(Tr_3 - Te_3 + \Delta H) \\ d_4 = c(Tr_4 - Te_4 + \Delta H) \end{cases}$$

in which c represents the speed of light.

Letting $X_u$, $Y_u$, $Z_u$ denote the position of the user and $X_{sat\_i}$, $Y_{sat\_i}$, $Z_{sat\_i}$ the position of the satellite i, where i can take (in figure 1 but not in any way that is limiting on the invention) the values 1 to 4, and assuming that these positions are expressed in the same frame of reference, the above becomes:

$$\begin{cases} d_1 = \sqrt{\left(X_u - X_{sat\_1}\right)^2 + \left(Y_u - Y_{sat\_1}\right)^2 + \left(Z_u - Z_{sat\_1}\right)^2} \\ d_2 = \sqrt{\left(X_u - X_{sat\_2}\right)^2 + \left(Y_u - Y_{sat\_2}\right)^2 + \left(Z_u - Z_{sat\_2}\right)^2} \\ d_3 = \sqrt{\left(X_u - X_{sat\_3}\right)^2 + \left(Y_u - Y_{sat\_3}\right)^2 + \left(Z_u - Z_{sat\_3}\right)^2} \\ d_4 = \sqrt{\left(X_u - X_{sat\_4}\right)^2 + \left(Y_u - Y_{sat\_4}\right)^2 + \left(Z_u - Z_{sat\_4}\right)^2} \end{cases}$$

This leads to the following system of equations:

$$\begin{cases} c(Tr_1 - Te_1 + \Delta H) = \sqrt{\left(X_u - X_{sat\_1}\right)^2 + \left(Y_u - Y_{sat\_1}\right)^2 + \left(Z_u - Z_{sat\_1}\right)^2} \\ c(Tr_2 - Te_2 + \Delta H) = \sqrt{\left(X_u - X_{sat\_2}\right)^2 + \left(Y_u - Y_{sat\_2}\right)^2 + \left(Z_u - Z_{sat\_2}\right)^2} \\ c(Tr_3 - Te_3 + \Delta H) = \sqrt{\left(X_u - X_{sat\_3}\right)^2 + \left(Y_u - Y_{sat\_3}\right)^2 + \left(Z_u - Z_{sat\_3}\right)^2} \\ c(Tr_4 - Te_4 + \Delta H) = \sqrt{\left(X_u - X_{sat\_4}\right)^2 + \left(Y_u - Y_{sat\_4}\right)^2 + \left(Z_u - Z_{sat\_4}\right)^2} \end{cases}$$

Solving this system of equations using methods perfectly familiar to the person skilled in the art (linearization method or Newton type non-linear minimization method) determines the position of the user ($X_u$, $Y_u$, $Z_u$) in the same frame of reference as that in which the position of the satellites is expressed, as well as the clock difference $\Delta H$ between the receiver and the satellites.

To this end figure 2 represents the position of the user 8 in the frame of reference tied to the satellite navigation system 6 tied to the Earth 7. In the example of the GPS, this frame of reference is WGS84. The coordinates of the user correspond to the coordinates on the axes taken by way of reference in this frame of reference, in this instance Xu [11], Yu [10], Zu [9]. Moreover, these coordinates are commonly expressed with respect to the terrestrial globe by representing the position of the user relative to the surface of the Earth and via the latitude, longitude and altitude. The conversion of the coordinates (Xu, Yu, Zu) into (longitude, latitude, altitude) is well known to the person skilled in the art. In the context of using the GPS, this conversion is given in the following system of equations. For this purpose the Earth is approximated by an ellipsoid of major half-axis a and minor half-axis b. Letting f denote the flattening (b-a)/a and e the eccentricity:

$$r = \sqrt{X_u^2 + Y_u^2}$$

$$E\_2 = a^2 - b^2$$

$$F = 54 * b^2 * Z_u^2$$

$$G = r^2 + (1 - e_{earth}^2) * Z_u^2 - e_{earth}^2 * E\_2$$

$$c_0 = \frac{e_{earth}^4 * F * r^2}{G^3}$$

$$s = \sqrt[3]{1 + c_0 + \sqrt{c_0^2 + 2c_0}}$$

$$P = \frac{F}{3 * G^2 * (1 + s + 1/s)^2}$$

$$Q = \sqrt{1 + 2 * e^4 * P}$$

$$r_0 = \frac{-P * e^2 * r}{1 + Q} + \sqrt{\frac{1}{2} a^2 * (1 + \frac{1}{Q}) - \frac{P * (1 - e_{earth}^2) * Z_u^2}{Q * (1 + Q)} - \frac{1}{2} P * r^2}$$

$$U = \sqrt{(r - e_{earth}^2 * r_0)^2 + Z_u^2}$$

$$V = \sqrt{(r - e_{earth}^2 * r_0)^2 + (1 - e_{earth}^2) * Z_u^2}$$

$$z_0 = \frac{b^2 * Z_u}{a * V}$$

$$\begin{cases} \lambda = \arctan 2(Y_u, Z_u) \\ \phi = \arctan 2(Z_u + e'^2 * z_0, r) \\ h = U * (1 - \frac{b^2}{a.V}) \end{cases}$$

where $\lambda$, $\phi$, $h$ are respectively the longitude, the latitude, and the altitude.

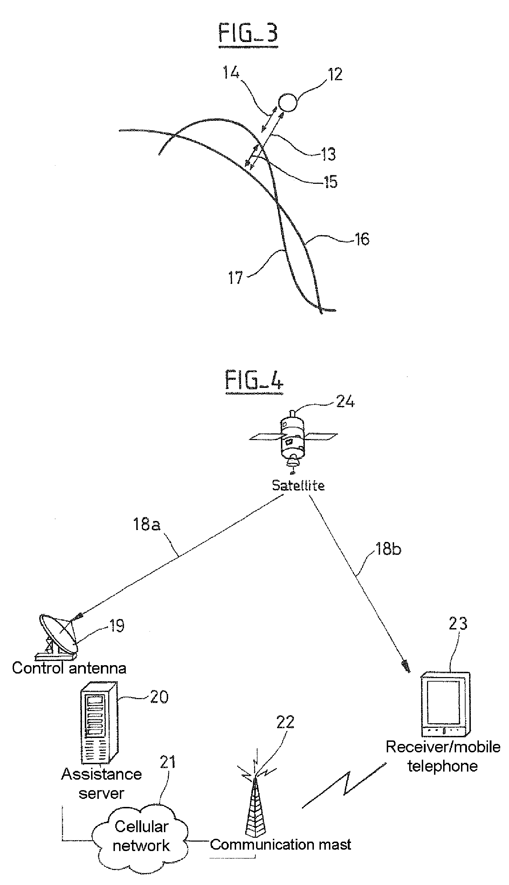

The altitude is given relative to the WGS84 reference ellipsoid that is a global approximation of the surface of the Earth. Locally, that altitude does not correspond to the altitude "sensed" by the user that is usually defined as the altitude above mean sea level. Figure 3 gives the example of a user 12 whose altitude supplied by a GPS, i.e. whose altitude above the reference ellipsoid 16, is the distance 13. The altitude above the local geoid is the distance 14. The difference between the two distances ([13]-[14]) is called the undulation of the geoid 15.

The present invention is aimed at a method of assisting a GPS or RNSS radio navigation receiver to calculate its altitude relative to a local geoid.

To this end, the invention consists in an assistance method, for a mobile device combining a GPS or RNSS radio navigation receiver with a cellular telecommunication transceiver, with the calculation of its altitude relative to a local geoid, said mobile device being connected to a navigation assistance system including:

- at least one navigation satellite,
- a telecommunication network for exchange of data between said mobile device and an assistance data server,
- a base station belonging to said telecommunication network and connecting the mobile device to said network, and
- an assistance data server adapted to use a method of calculating the undulation at a given position, said method being characterized in that it includes:

- a step of the mobile device sending a request for navigation assistance to the data server via said base station,
- a step of said assistance data server calculating the undulation of the geoid at the position of said base station from the information as to the position of the base station, the calculation of the undulation possibly being effected via the application of a serial decomposition of the geoid (i.e. GTM96),
- a step of said assistance data server sending the results of the calculation of said undulation to the mobile device.

In one embodiment the assistance data server comprises a database containing the undulation values at the positions forming a grid over a portion of the terrestrial globe, the value of the undulation of the geoid at the position of said base station is calculated from the value of the undulation by interpolation of the values of the undulations of the geoids at the positions bracketing said base station.

In one embodiment, prior to the calculation of the value of the undulation of the geoid at the position of said base station, the values of the undulations of the geoids at the positions bracketing said base station are transmitted by the assistance data server to the mobile device so that the calculation of the value of the undulation of the geoid at the position of said base station is effected by the mobile device.

Other features and advantages of the invention will become apparent on reading the following detailed description and examining the appended drawings, in which:

- figure 1, already described, shows a radio navigation satellite receiver in a radio navigation satellite system,
- figure 2, already described, represents the position of a user in the frame of reference tied to the navigation satellite system tied to the Earth,
- figure 3 shows the example of a user whose altitude supplied by a GPS, which is the altitude above the reference ellipsoid, provides a first distance while the altitude above the local geoid is a second distance,
- figure 4 represents one embodiment of a system in accordance with the invention for assisting a mobile device, and
- figure 5 represents an embodiment of the method according to the invention in which the assistance data server calculates the undulation by an approximation deduced from a meshing of the undulation.

The information necessary to calculate the position of the user, in particular the position of the satellites via Kepler orbital parameters, are conveyed in the satellite message itself. As described hereinabove in the case of the GPS, this message is carried at the rate of 50 bits per second. The Kepler parameters, called ephemeredes, are transmitted every 30 seconds. A receiver must therefore wait at least 30 seconds before calculating a first position. To improve this performance, it is known to associate a cellular mobile telephone device, of the GSM (Global System for Mobile communications) mobile telephone type for example, with an RNSS (Radio Navigation Satellite System) receiver such as GPS (Global Positioning System), GLONASS or GALILEO type receiver through which the mobile device picks up transmissions from satellites to determine its position. A device combining a satellite positioning receiver associated with a cellular mobile telephone transceiver is shown in figure 4. A satellite 24 transmits a navigation signal including orbital information referred to as a navigation model or ephemeredes. This information is repeated with a period of 30 seconds. An assistance data server 20 situated in a mobile telephone network 21 receives the message 18a from the satellite 24 via a local monitoring antenna 19. This message is processed to enable the server 20 to extract the navigation model and to store it until the next update effected by the satellite. This updating conventionally takes place every two hours. The device 23 receives a signal 18b from the satellite 24 and processes it to establish the distance between it and the satellite 24, using a known method. Beforehand, the device 23 interrogates the assistance server 20 which very quickly sends it the navigation model of the satellite 24 via the cellular network 21 and the base station 22. The satellite 24 is in view from the receiver 23 and from the antenna 19, of course. This system has various advantages. The mobile 23 has access to the navigation model much more quickly because of the data rates used in cellular telecommunication networks. Also, the device 23 does not read the navigation model in the navigation signal, which makes the location process more robust.

Moreover, it is known that in a device of this kind known as an assisted-GPS or assisted-RNSS device, a much larger set of data than the orbital parameters alone can be sent to improve the performance of the GPS or RNSS receiver: time information, various propagation error correction parameters, etc.

The present invention aims to use the GPS to assist the device 23 to calculate its altitude relative to a local geoid. The simple and effective method assumes that the mobile device is connected to a navigation assistance system including:

- at least one navigation satellite,
- a telecommunication network for exchange of data between said mobile device and an assistance data server,
- a base station belonging to said telecommunication network and connecting the mobile device to said network,
- an assistance data server adapted to use a method of calculating the undulation at a given position, said method being characterized in that it includes:

- a step of the mobile device sending a request for navigation assistance to the data server via said base station,
- a step of said assistance data server calculating the undulation of the geoid at the position of said base station from the information as to the position of the base station, the calculation of the undulation possibly being effected via the application of a serial decomposition of the geoid (i.e. GTM96),
- a step of said assistance data server sending the results of the calculation of said undulation to the mobile device.

That undulation is then sent to the mobile device 23 which, after calculation of its altitude in a WGS84 frame of reference, deduces therefrom simply by subtracting the undulation its altitude relative to the local geoid (which was transmitted to it by the assistance data server).

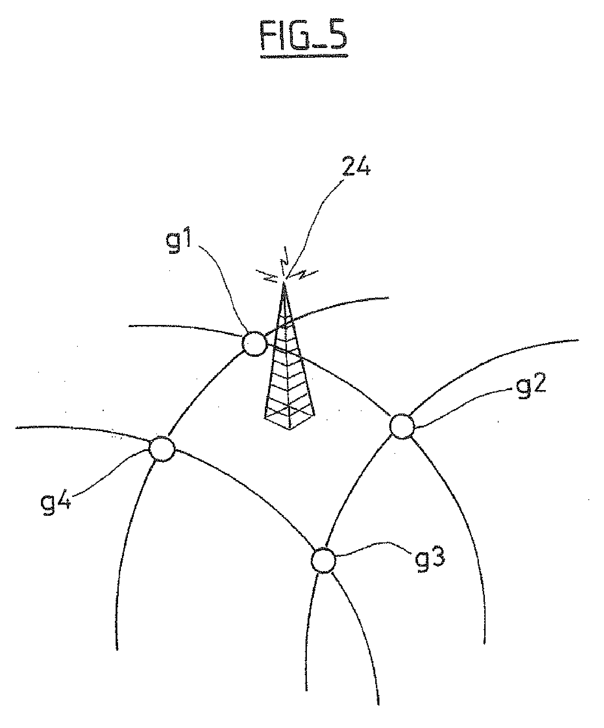

In one embodiment, the data server 20 calculates the undulation by an approximation deduced from a meshing of the undulation. The assistance data server has a database containing the value of the undulation at the position of points forming a grid over a portion of the globe and the value of the undulation at the position of the base station is deduced from the value of the undulation by interpolation. This is represented in figure 5. The position of the base station 24 is $X_{BTS}$. It is assumed that the server knows the undulation at the points g1, g2, g3, g4. The value of the undulation at these points is denoted: o1, o2, o3, o4. The server then deduces from these the value of the undulation at the position of the base station ($O_{BTS}$) from the formula:

$$\begin{cases} d_1 = \sqrt{(\lambda_1 - \lambda_{BTS})^2 + (\phi_1 - \phi_{BTS})^2} \\ d_2 = \sqrt{(\lambda_2 - \lambda_{BTS})^2 + (\phi_2 - \phi_{BTS})^2} \\ d_3 = \sqrt{(\lambda_3 - \lambda_{BTS})^2 + (\phi_3 - \phi_{BTS})^2} \\ d_4 = \sqrt{(\lambda_4 - \lambda_{BTS})^2 + (\phi_4 - \phi_{BTS})^2} \end{cases}$$

where $\lambda_i$ denotes the latitude of the grid points i (i having values from 1 to 4) and $\phi_i$ designates the longitude of the grid points i (i having values from 1 to 4). $\lambda_{BTS}$ and $\phi_{BTS}$ respectively denote the latitude and the longitude of the base station.

$$\begin{cases} \rho_1 = 1/d_1 \\ \rho_2 = 1/d_2 \\ \rho_3 = 1/d_3 \\ \rho_4 = 1/d_4 \end{cases}$$

The undulation at the position of the base station is then given by

$$O_{BTS} = \frac{\sum_{i=1}^{4} \rho_i * o_i}{\sum_{i=1}^{4} \rho_i}$$

In a variant, the server sends the values of the undulations of the grid points g1, g2, g3, g4 directly to the device 23 so that the device 23 itself calculates an interpolation of the value of the geoid at the position that it has calculated. Thus the value of this embodiment of the invention lies in the fact that the server sends the device 23 only a limited set of the geoid value grid points. The set of grid points sent to the device 23 is determined at least by the position of the base station 22, but can also be determined by a metric associated with the communication link between the base station and the device 23. That metric can in fact be deduced from a signal attenuation value on the communication link giving an indication of the distance between the base station and the mobile 23.

**Claims**

1. Assistance method, for a mobile device combining a GPS or RNSS radio navigation receiver with a cellular telecommunication transceiver, with the calculation of its altitude relative to a local geoid, said mobile device being connected to a navigation assistance system including :

   - at least one navigation satellite,
   - a telecommunication network for exchange of data between said mobile device and an assistance data server,
   - a base station belonging to said telecommunication network and connecting the mobile device to said network, and
   - an assistance data server adapted to use a method of calculating the undulation at a given position,

   said method being **characterized in that** it includes:

   - a step of the mobile device sending a request for navigation assistance to the data server via said base station,
   - a step of said assistance data server calculating the undulation of the geoid at the position of said base station from the information as to the position of the base station, the calculation of the undulation possibly being effected via the application of a serial decomposition of the geoid (i.e. GTM96),

- a step of said assistance data server sending the results of the calculation of said undulation to the mobile device.

**2.** Method according to claim 1, **characterized in that**, the assistance data server comprising a database containing the undulation values at the positions forming a grid over a portion of the terrestrial globe, the value of the undulation of the geoid at the position of said base station is calculated from the value of the undulation by interpolation of the values of the undulations of the geoids at the positions bracketing said base station.

**3.** Method according to claim 2, **characterized in that**, prior to the calculation of the value of the undulation of the geoid at the position of said base station, the values of the undulations of the geoids at the positions bracketing said base station are transmitted by the assistance data server to the mobile device so that the calculation of the value of the undulation of the geoid at the position of said base station is effected by the mobile device.

## FIG_1

## FIG_2

## FIG_3

## FIG_4

Satellite

18a

18b

19

Control antenna

20

Assistance server

21

Cellular network

22

Communication mast

23

Receiver/mobile telephone

24

# FIG_5

**European Patent Office**

**EUROPEAN SEARCH REPORT**

Application Number

EP 07 11 8617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 464 981 A (TELECOM ITALIA MOBILE SPA [IT]) 6 October 2004 (2004-10-06)<br>* paragraph [0035] - paragraph [0040] *<br>* paragraph [0184] - paragraph [0187] *<br>* paragraph [0224] - paragraph [0228] *<br>----- | 1-3 | INV.<br>G01S1/00 |
| A | WO 2004/072583 A (HARMAN BECKER AUTOMOTIVE SYS [DE]; BRUELLE-DREWS CHRISTIAN [DE]) 26 August 2004 (2004-08-26)<br>* figures 1,2 *<br>* paragraph [0020] - paragraph [0021] *<br>* paragraph [0031] - paragraph [0033] *<br>----- | 1-3 | |
| A | WO 2005/012940 A (SIRF TECH INC [US]; PHATAK MAKARAND [US]; COX GEOFFREY F [US]; GARIN L) 10 February 2005 (2005-02-10)<br>* figures 2-4 *<br>* paragraph [0017] *<br>* paragraph [0022] - paragraph [0025] *<br>* paragraph [0027] *<br>* paragraph [0042] - paragraph [0049] *<br>----- | 1-3 | |
| A | US 6 061 018 A (SHEYNBLAT LEONID [US]) 9 May 2000 (2000-05-09)<br>* figures 1,4 *<br>* column 9, line 24 - line 42 *<br>* column 10, line 6 - line 14 *<br>* column 10, line 40 - line 46 *<br>----- | 1-3 | TECHNICAL FIELDS SEARCHED (IPC)<br><br>G01S |
| A | EP 1 531 338 A (NIPPON ELECTRIC CO [JP]) 18 May 2005 (2005-05-18)<br>* paragraph [0067] - paragraph [0070] *<br>----- | 1-3 | |

The present search report has been drawn up for all claims

| Place of search | Date of completion of the search | Examiner |
|---|---|---|
| Munich | 12 February 2008 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 8617

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2008

| Patent document cited in search report | | Publication date | Patent family member(s) | | Publication date |
|---|---|---|---|---|---|
| EP 1464981 | A | 06-10-2004 | NONE | | |
| WO 2004072583 | A | 26-08-2004 | AU | 2003216243 A1 | 06-09-2004 |
| | | | CA | 2514116 A1 | 26-08-2004 |
| | | | CN | 1751225 A | 22-03-2006 |
| | | | EP | 1592947 A1 | 09-11-2005 |
| | | | JP | 2006514740 T | 11-05-2006 |
| WO 2005012940 | A | 10-02-2005 | CN | 1853115 A | 25-10-2006 |
| | | | EP | 1651977 A1 | 03-05-2006 |
| | | | JP | 2007501381 T | 25-01-2007 |
| | | | KR | 20060056357 A | 24-05-2006 |
| | | | US | 2005027450 A1 | 03-02-2005 |
| US 6061018 | A | 09-05-2000 | AT | 369571 T | 15-08-2007 |
| | | | AU | 763226 B2 | 17-07-2003 |
| | | | AU | 4406199 A | 23-11-1999 |
| | | | BR | 9910229 A | 29-01-2002 |
| | | | CA | 2331709 A1 | 11-11-1999 |
| | | | CN | 1383493 A | 04-12-2002 |
| | | | CN | 1670542 A | 21-09-2005 |
| | | | CN | 1670543 A | 21-09-2005 |
| | | | EP | 1840591 A1 | 03-10-2007 |
| | | | EP | 1840592 A1 | 03-10-2007 |
| | | | EP | 1145035 A2 | 17-10-2001 |
| | | | HK | 1049044 A1 | 03-02-2006 |
| | | | IL | 139469 A | 15-12-2004 |
| | | | JP | 2002532679 T | 02-10-2002 |
| | | | MX | PA00010881 A | 10-02-2003 |
| | | | WO | 9957575 A2 | 11-11-1999 |
| | | | US | 6307504 B1 | 23-10-2001 |
| EP 1531338 | A | 18-05-2005 | CN | 1616986 A | 18-05-2005 |
| | | | JP | 2005147720 A | 09-06-2005 |
| | | | US | 2005116858 A1 | 02-06-2005 |